# EUROPEAN PATENT APPLICATION

(11) **EP 3 893 385 A1**
(43) Date of publication of application: **13.10.2021**
(21) Application number: 20382277.0
(22) Date of filing: 06.04.2020
(51) Int. Cl.: H02P 25/022, H02P 9/30, H02P 9/10

(54) **SYNCHRONOUS MACHINE SYSTEM**

(71) Applicant: Indar Electric S.L., 20200 Beasain (ES)
(72) Inventor: GARMENDIA OLARREAGA, Iker, 48700 Ondarroa (ES); GALARRAGA TELLERIA, Alexander, 20730 Azpeitia (ES); CALVO MADARIAGA, Xabier, 20200 Beasain (ES)
(74) Representative: Igartua, Ismael

(57) **Abstract**

The invention refers to a synchronous machine system comprising a synchronous machine (1) including a field winding (1.3); a DC excitation unit (3) comprising a first converter (3.1), a DC bus (3.0) including a DC link capacitor (3.3) coupled between both rails of the DC bus (3.0), the DC excitation unit (3) being structured to receive power from a power source (4) and to supply DC power to the field winding (1.3) of the synchronous machine (1); and an energy storage circuit (5) coupled to the DC bus (3.0), in parallel to the DC link capacitor (3.3), and comprising a storing unit and a circuit portion structured to at least charge the storing unit using power from the power source (4). The DC excitation unit (3) further comprises a second converter (3.2) coupled between the DC bus (3.0) and the field winding (1.3).

## Description

### FIELD OF THE INVENTION

The present invention relates to synchronous machine systems, in particular to synchronous machine systems used in pump-storages (also known as Pumped - Storage Hydroelectricity, PSH, or Pumped Hydroelectric Energy Storage, PHES) connected to a grid.

### BACKGROUND OF THE INVENTION

Synchronous machine systems comprising a synchronous machine and a DC excitation unit for said machine are commonly used in systems connected to a grid, such as pump-storages. When a power failure is present in the grid, a voltage dip for example, the DC excitation unit must provide the required power to the synchronous machine, at least during a determined time, to avoid the loss of the machine's pole and/or to inject reactive power into the grid. The determined time and the required power depend on the corresponding country grid codes and type of fault.

In order to solve said drawbacks, synchronous machine systems comprising a DC excitation unit with an energy storage circuit are known. During normal operation, the energy storage circuit can be charged with power from the power supply, and when a power failure is present in the grid, said power charged in the energy storage circuit can be used to provide the required power to the synchronous machine.

Such a synchronous machine system is disclosed in US2017063280A1, said synchronous machine system comprising a synchronous motor including a stator, a stator winding, a rotor and a field winding; an AC power supply circuit, preferably a power grid, structured to provide power to the stator winding of the synchronous motor; a DC excitation unit comprising a first converter, a DC bus including a first rail, a second rail and a DC link capacitor coupled between both rails, the DC excitation unit being structured to receive power from a power source and to supply DC power to the field winding of the synchronous motor; and an energy storage circuit coupled to the DC bus of the DC excitation unit in parallel to the DC link capacitor and comprising a storing unit and a circuit portion structured to at least charge the storing unit using power from the power source. The synchronous machine system is adapted for providing power to the DC excitation unit during a power failure of the AC power source.

### DISCLOSURE OF THE INVENTION

The object of the invention is to provide a synchronous machine system, as defined in the claims.

The synchronous machine system comprises:
- a synchronous machine including a stator, a stator winding, a rotor and a field winding;
- an AC power supply circuit, preferably a power grid, structured to provide power to the stator winding of the synchronous machine and/or to receive power from the stator winding of the synchronous machine;
- a DC excitation unit comprising a first converter, a DC bus including a first rail, a second rail and a DC link capacitor coupled between both rails, the DC excitation unit being structured to receive power from a power source and to supply DC power to the field winding of the synchronous machine; and
- an energy storage circuit coupled to the DC bus of the DC excitation unit in parallel to the DC link capacitor and comprising a storing unit and a circuit portion structured to at least charge the storing unit using power from the power source.

The DC excitation unit further comprises a second converter coupled between the DC bus and the field winding, such that the DC voltage provided to the DC bus from the first converter can be different from the DC voltage required by the field winding of the synchronous machine, unlike what occurs in the prior art. Thus, the DC excitation unit of the invention allows the field winding to be overexcited when required, by controlling the first and second converters of the DC excitation unit accordingly. This situation is usually given when facing a voltage dip in the grid, situations in which it is common to have to overexcite the synchronous machine to avoid the loss of the machine's pole and to inject a required reactive power into the grid.

These and other advantages and features of the invention will become evident in view of the drawings and the detailed description of the invention.

### BRIEF DESCRIPTION OF THE DRAWINGS

Figure 1 shows an embodiment of the synchronous machine system of the invention.
Figure 2 shows an embodiment of the synchronous machine system, without the stator and rotor of the synchronous machine and with a first configuration of the energy storage circuit.
Figure 3 shows an embodiment of the synchronous machine system, without the stator and rotor of the synchronous machine and with a second configuration of the energy storage circuit.
Figure 4 shows an embodiment of the synchronous machine system, without the stator and rotor of the synchronous machine and related with the first configuration of the energy storage circuit.
Figure 5 shows another embodiment of the synchronous machine system, without the stator and rotor of the synchronous machine and related with the configuration of the energy storage circuit.
Figure 6 shows an embodiment of the synchronous machine system, without the stator and rotor of the synchronous machine and related with the second configuration of the energy storage circuit.

### DETAILED DESCRIPTION OF THE INVENTION

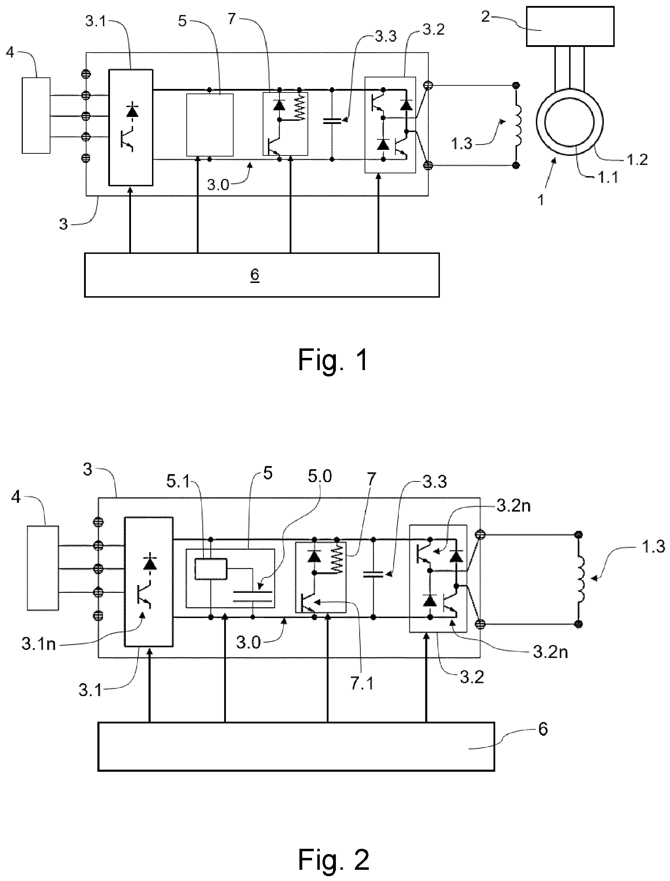

Figure 1 schematically show an embodiment of the synchronous machine system according to the invention. Said synchronous machine system comprises:
- a synchronous machine 1 including a stator 1.2, a stator winding (not shown in Figures), a rotor 1.1 and a field winding 1.3;
- an AC power supply circuit 2 structured to provide power to the stator winding of the synchronous motor 1 (when the synchronous machine 1 acts as a motor) and/or to receive power from the stator of the synchronous machine 1 (when the synchronous machine 1 acts as a generator);
- a DC excitation unit 3 comprising a first converter 3.1, a DC bus 3.0 including a first rail, a second rail and a DC link capacitor 3.3 coupled between both rails, the DC excitation unit 3 being structured to receive power from a power source 4 and to supply DC power to the field winding 1.3 of the synchronous machine 1; and
- an energy storage circuit 5 coupled to the DC bus 3.0 of the DC excitation unit 3 in parallel to the DC link capacitor 3.3 and comprising a storing unit 5.0 and a circuit portion 5.1 structured to at least charge the storing unit 5.0 using power from the power source 4. In any of the embodiments of the invention, the storage unit 5.0 can comprise at least one ultracapacitor or at least one rechargeable battery.

The DC excitation unit 3 further comprises a second converter 3.2 coupled between the DC bus 3.0 and the field winding 1.3, such that the DC voltage provided to the DC bus 3.2 from the first converter 3.1 or from the storage unit 5 can be different from the DC voltage required by the field winding 1.3 of the synchronous machine 1.

In a preferred embodiment, the second converter 3.2 of the DC excitation unit 3 comprises a plurality of controllable switches 3.2n, and the system comprises a controller 6 communicated with said controllable switches 3.2n and configured for controlling said controllable switches 3.2n in order to provide the required power to the field winding 1.3 of the synchronous machine 1. In said preferred embodiment, the second converter 3.2 is DC/DC converter.

In the preferred embodiment, the first converter 3.1 of the DC excitation unit 3 comprises a plurality of controllable switches 3.1n, the controller 6 being communicated with said controllable switches 3.1n of the first converter 3.1 and being configured for controlling said controllable switches 3.1n of the first converter 3.1 and the controllable switches 3.2n of the second converter 3.2 of the DC excitation unit 3 in a coordinated manner.

In the preferred embodiment, the controller 6 is configured to control the controllable switches 3.1n of the first converter 3.1 of the DC excitation unit 3 in order to provide the DC bus 3.0 of said DC excitation unit 3 with a voltage higher than the nominal voltage of the field winding 1.3 of the synchronous machine 1, when the DC excitation unit 3 is supplying DC power to said field winding 1.3. Therefore, the DC bus 3.0 comprises a sufficient voltage value for over exciting the synchronous machine 1 if so required.

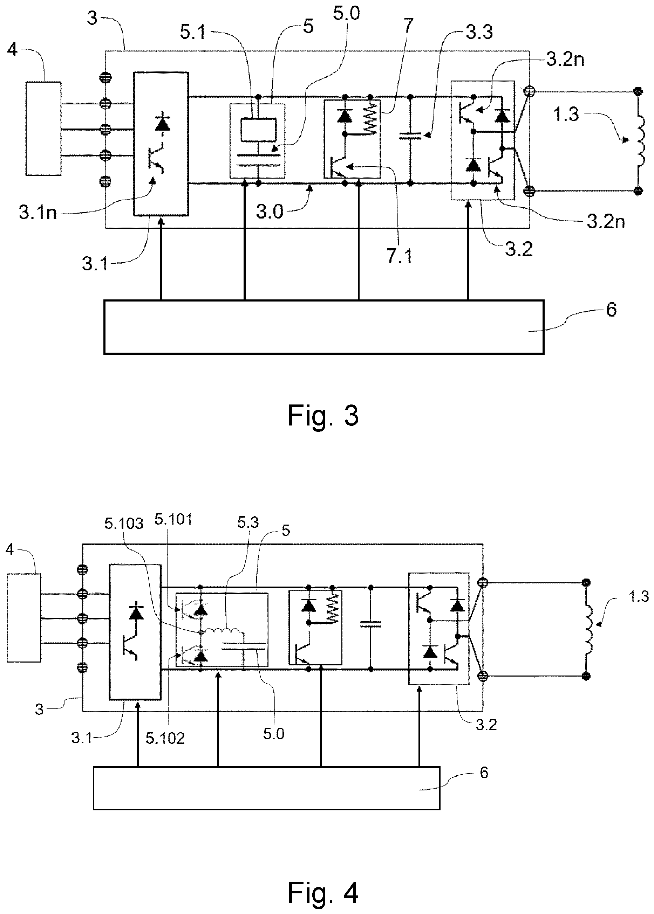

The storing unit 5.0 is configured for being charged and discharged through the circuit portion 5.1 of the storage circuit 5, a second side of said storing unit 5.0 being directly coupled with the second rail of the DC bus 3.0 of the DC excitation unit 3 and a first side of said storing unit 5.0 being coupled to the first rail of said DC bus 3.0 through the circuit portion 5.1 of said storage circuit 5, as shown in Figure 2 (first configuration of the storage circuit 5) and in Figure 3 (second configuration of the storage circuit 5). Said circuit portion 5.1 comprises at least one controllable switch 5.101, 5.102; 5.101a, 5.102a; or 5s, and, in some embodiments, the energy storage circuit 5 is thus structured to actively provide DC power to the field winding 1.3 of the synchronous machine 1 in the event of the power source failure. Therefore, the size of the storing unit can be reduced comparing to passive circuits, as discharging can be done only when required.

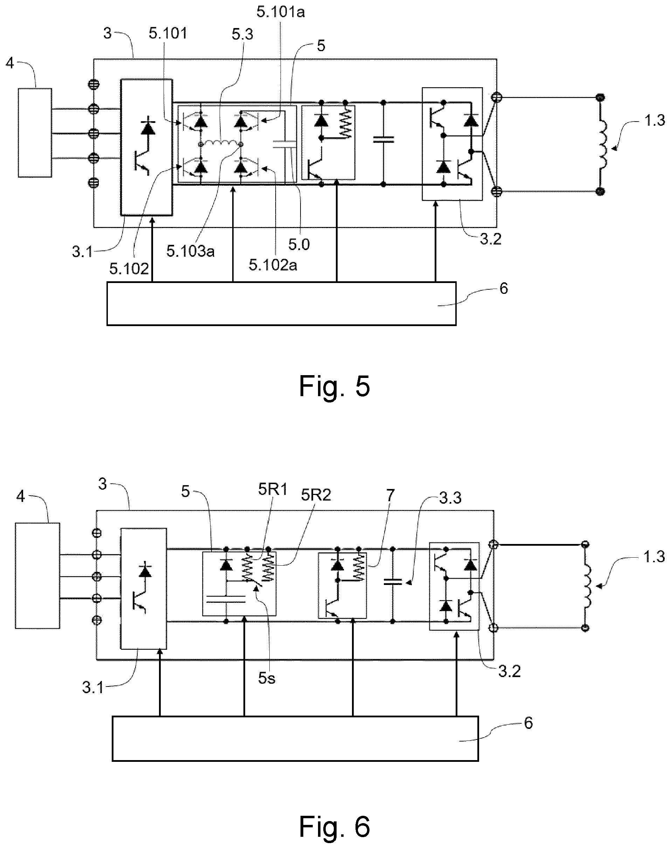

In some embodiments incorporating the first configuration of the storage circuit 5, as the embodiments shown in Figures 4 and 5, in which the energy storage circuit 5 is structured to actively provide DC power to the field winding 1.3 of the synchronous machine 1 in the event of the power source failure, the circuit portion 5.1 is directly connected between both rails of the DC bus 3.0. In other embodiments, as the embodiments shown in figures 3 and 6, the circuit portion 5.1 is in series connection with the storing unit 5.0 between both rails of the DC bus 3.0.

In one embodiment shown in Figure 4, the circuit portion 5.1 of the storage circuit 5 comprises an active electrical branch 5.10 coupled between both rails of the DC bus 3.0 of the DC excitation unit 3, said active electrical branch 5.10 comprising two controllable switches 5.101 and 5.102 connected in series in a common point 5.103. The first side of the storing unit 5.0 is connected to said common point 5.103 at least through an inductance 5.3. In this embodiment, the voltage on the DC bus 3.0 comprises a higher value than the voltage of the storing unit 5.0, and thanks to the active electrical branch 5.10 the voltage on the DC bus 3.0 can be controlled as required, so it can be maintained constant or can be varied as required, while the storing unit 5.0 is being discharged, at least while there is enough energy stored in said storing unit 5.0. Said control can be achieved in a simple manner, not requiring a great number of elements.

In another embodiment shown in Figure 5, the circuit portion 5.1 of the storage circuit 5 further comprises an additional active electrical branch 5.10a coupled between the second rail of said DC bus 3.0 of the DC excitation unit 3 and the first side of the storing unit 5.0, said additional active electrical branch 5.10a comprising two controllable switches 5.101a and 5.102a connected in series in a common point 5.103a. Said common point 5.103a and the common point 5.103 of the other active electrical branch 5.10 being connected through the inductance 5.3. In this case, the storing unit 5.0 can comprise a higher or lower voltage value than the DC bus 3.0, and the energy stored therein can be used, for example, when starting up the synchronous machine system (after a black-out, for example), it being possible for said storage circuit 5 to act as an uninterruptible power supply (UPS). Said embodiments allows to have a greater control over the voltage of the DC bus 3.0, as the storing unit 5.0 can be charged with a voltage higher than said voltage of the DC bus 3.0, and can be useful for applications, where the variations of the voltage of the DC bus 3.0 or the supply voltage 4 are higher than in other applications. Said embodiment requires more elements than the embodiment shown in Figure 4.

In some embodiments incorporating the second configuration of the storage circuit 5 as the one shown in Figure 6, the circuit portion 5.1 of the storage circuit 5 comprises a passive electrical branch coupled between both rails of the DC bus 3.0 of the DC excitation unit 3, said passive electrical branch comprising a diode and the storing unit 5.0 connected in series in a common point, the anode of said diode being coupled to the first side of the storing unit 5.0 and the cathode being coupled to the first bar of the DC bus 3.0 In said embodiment, the circuit portion 5.1 further comprises an active electrical branch coupled between said common point and the first rail of said DC bus 3.0.

In the said latter embodiment, the active electrical branch comprises preferably a first resistor 5R1 and a second resistor 5R2 connected in parallel, a first respective end of the first and second resistors 5R1 and 5R2 being connected to the first rail of the DC bus 3.0 of the DC excitation unit 3, a second end of the first resistor 5R1 being coupled to the common point and a second end of the second resistor 5R2 being coupled to the second end of the first resistor 5R1 through a controllable switch 5s. Selecting the desired values of the resistors 5R1 and 5R2, the charge and discharge rate of the storing unit 5.0 can be selectively fixed. The first resistor 5R1 comprises a resistance value greater than the resistance value of the second resistor 5R2. Preferably, when the storing unit 5.0 must be charged the controllable switch 5s is opened, firstly in order to avoid current peaks (due to the low value of the second resistor 5R2), it being closed later for finishing the charge more quickly.

In any of the embodiments, the DC excitation unit 3 comprises an active protection system 7 coupled between the two rails of the DC bus 3.0 of said DC excitation unit 3, in order to protect the synchronous machine system from over voltages. The active protection system 7 is preferably a crowbar and comprises a controllable switch7.1 in order to cause the active protection system 7 to act when required, and only when required (when the voltage in the DC bus 3.0 reaches a threshold value, for example). Said active protection system 7 is connected in parallel with the storage circuit 5 to the DC bus 3.0 of the DC excitation unit 3, between both side rails of the DC bus 3.0.

## Claims

1. Synchronous machine system comprising a synchronous machine (1) including a stator (1.2), a stator winding, a rotor (1.1) and a field winding (1.3); an AC power supply circuit (2) structured to provide power to the stator winding of the synchronous machine (1) and/or to receive power from the stator of the synchronous machine (1); a DC excitation unit (3) comprising a first converter (3.1), a DC bus (3.0) including a first rail, a second rail and a DC link capacitor (3.3) coupled between both rails, the DC excitation unit (3) being structured to receive power from a power source (4) and to supply DC power to the field winding (1.3) of the synchronous machine (1); and an energy storage circuit (5) coupled to the DC bus (3.0) of the DC excitation unit (3) in parallel to the DC link capacitor (3.3) and comprising a storing unit (5.0) and a circuit portion (5.1) structured to at least charge the storing unit (5.0) using power from the power source (4); **characterised in that** the DC excitation unit (3) further comprises a second converter (3.2) coupled between the DC bus (3.0) and the field winding (1.3), such that the DC voltage provided to the DC bus (3.0) from the first converter (3.1) or from the storage unit (5) can be different from the DC voltage required by the field winding (1.3) of the synchronous machine (1).

2. Synchronous machine system according to claim 1, wherein the second converter (3.2) of the DC excitation unit (3) comprises a plurality of controllable switches (3.2n), the system comprising a controller (6) communicated with said controllable switches (3.2n) and configured for controlling said controllable switches (3.2n) in order to provide the required power to the field winding (1.3) of the synchronous machine (1).

3. Synchronous machine system according to claim 2, wherein the first converter (3.1) of the DC excitation unit (3) comprises a plurality of controllable switches (3.1n), the controller (6) being communicated with said controllable switches (3.1n) of the first converter (3.1) and being configured for controlling said controllable switches (3.1n,) of the first converter (3.1) and the controllable switches (3.2n) of the second converter (3.2) of the DC excitation unit (3) in a coordinated manner.

4. Synchronous machine system according to claim 3, wherein the controller (6) is configured to control the controllable switches (3.1n) of the first converter (3.1) of the DC excitation unit (3) in order to provide the DC bus (3.0) of said DC excitation unit (3) with a voltage higher than the nominal voltage of the field winding (1.3) of the synchronous machine (1), when the DC excitation unit (3) is supplying DC power to said field winding (1.3).

5. Synchronous machine system according to any of claims 1 to 4, wherein the second converter (3.2) of the DC excitation unit (3) is DC/DC converter.

6. Synchronous machine system according to any of claims 1 to 5, wherein the storing unit (5.0) is configured for being charged and discharged through the circuit portion (5.1) of the storage circuit (5), a second side of said storing unit (5.0) being directly coupled with the second rail of the DC bus (3.0) of the DC excitation unit (3) and a first side of said storing unit (5.0) being coupled to the first rail of said DC bus (3.0) through the circuit portion (5.1) of said storage circuit (5), said circuit portion (5.1) comprising at least one controllable switch (5.101, 5.102; 5.101a, 5.102a; 5s).

7. Synchronous machine system according to claim 6, wherein the energy storage circuit (5) is structured to actively provide DC power to the field winding (1.3) of the synchronous machine (1) in the event of the power source failure, the circuit portion (5.1) of the storage circuit (5) comprising an active electrical branch (5.10) coupled between both rails of the DC bus (3.0) of the DC excitation unit (3), said active electrical branch (5.10) comprising two controllable switches (5.101, 5.102) connected in series in a common point (5.103), the first side of the storing unit (5.0) being connected to said common point (5.103) at least through an inductance (5.3).

8. Synchronous machine system according to claim 7, wherein the circuit portion (5.1) of the storage circuit (5) comprises an additional active electrical branch (5.10a) coupled between the second rail of said DC bus (3.0) of the DC excitation unit (3) and the first side of the storing unit (5.0), said additional active electrical branch (5.10a) comprising two controllable switches (5.101a, 5.102a) connected in series in a common point (5.103a), said common point (5.103a) and the common point (5.103) of the other active electrical branch (5.10) being connected through the inductance (5.3).

9. Synchronous machine system according to claim 6, wherein the circuit portion (5.1) of the storage circuit (5) comprises a passive electrical branch coupled between both rails of the DC bus (3.0) of the DC excitation unit (3), said passive electrical branch comprising a diode and the storing unit (5.0) connected in series in a common point, the anode of said diode being coupled to the first side of the storing unit (5.0) and the cathode being coupled to the first bar of the DC bus (3.0), the circuit portion (5.1) further comprising an active electrical branch coupled between said common point and the first rail of said DC bus (3.0).

10. Synchronous machine system according to claim 9, wherein the active electrical branch comprises a first resistor (5R1) and a second resistor (5R2) connected in parallel, a first respective end of the first and second resistors (5R1, 5R2) being connected to the first rail of the DC bus (3.0) of the DC excitation unit (3), a second end of the first resistor (5R1) being coupled to the common point and a second end of the second resistor (5R2) being coupled to the second end of the first resistor (5R1) through a controllable switch (5s).

11. Synchronous machine system according to claim 10, wherein the first resistor (5R1) comprises a resistance value greater than the resistance value of the second resistor (5R2).

12. Synchronous machine system according to any of claims 1 to 11, wherein the storage unit (5.0) comprises at least an ultracapacitor or at least one rechargeable battery.

13. Synchronous machine system according to any of claim 1 to 12, wherein the DC excitation unit (3) comprises an active protection system (7) coupled between the two rails of the DC bus (3.0) of said DC excitation unit (3).

14. Synchronous machine system according to claim 13, wherein the active protection system (7) is a crowbar and comprises a controllable switch (7.1).

15. Synchronous machine system according to claim 13 or 14, wherein the active protection system (7) is connected in parallel with the storage circuit (5) to the DC bus (3.0) of the DC excitation unit (3).
